# EUROPEAN PATENT APPLICATION

(11) **EP 4 723 575 A1**
(43) Date of publication of application: **08.04.2026**
(21) Application number: 25206619.6
(22) Date of filing: 03.10.2025
(51) Int. Cl.: H04L 41/142, H04L 41/149, H04L 47/22, H04L 41/16, H04L 43/02, H04L 43/08

(54) **SYSTEM AND METHOD FOR DATA TRIAGE AND FAULT DETECTION IN ROBOTICS AND SPACE OPERATIONS**

(30) Priority: 03.10.2024 US 202463703029 P
(71) Applicant: MacDonald, Dettwiler and Associates Inc., Brampton, Ontario L6Y 6K7 (CA)
(72) Inventor: NIKSIRAT, Parna, Brampton, L6Y 6K7 (CA); LANGLEY, Christopher Stewart, Brampton, L6Y 6K7 (CA)
(74) Representative: Mewburn Ellis LLP

(57) **Abstract**

Systems and methods for performing data triage in a remotely operated device system are provided. The method includes: providing data to an autonomy processing device configured to execute one or more anomaly detection software components, the data collected during performance of one or more tasks by a remotely operated device of the remotely operated device system; detecting off-nominal events in the data with the one or more anomaly detection software modules and flagging each off-nominal event as an anomalous event data element; prioritizing the anomalous event data elements using an autonomous data triage module to obtain a ranked set of anomalous event data elements; and transmitting a subset of the ranked anomalous event data elements during a subsequent available communication window according to ranking to a remote location. In an embodiment, the remotely operated device system is a space robotic system, and the remote location is on Earth.

## Description

### Technical Field

The following relates generally to space-based robotics operations, and more particularly to systems and methods for triaging data to be downlinked from a space robotics system to ground.

### Introduction

Space robotics systems provide numerous unique challenges. One such challenge is monitoring the system for proper and safe operation during its lifetime. Data providing insights into the behaviour of the robotics system is collected at the site of operation (i.e., on spacecraft, in the space segment), while the assets for analyzing and assessing such collected data are located on ground. During periods of loss-of-signal (LOS), data in the form of telemetry, logs, point clouds, video, and the like can accumulate during performance of robotic operations. There is often a limited bandwidth for downlinking data during acquisition of signal (AOS) and even more limited memory storage available onboard. There is thus a need to prioritize which data to downlink during communication windows due to limited bandwidth and an abundance of data.

Existing approaches to addressing this issue involve ground operators manually selecting the data to be downlinked. Currently, human operators select data packets manually based on operation, time, and whether they observe or faced a failure situation while on console.

It is also recognized that such challenges may also apply to other remotely controlled or operated devices or systems, including those with autonomous machines.

Accordingly, there is a need for an improved system and method for data triage in space robotics systems and other remotely controlled or operated systems that overcomes at least some of the disadvantages of existing systems and methods.

### Summary

A method of performing data triage in a remotely operated device system is provided. The method includes: providing data to an autonomy processing device configured to execute one or more anomaly detection software components, the data collected during performance of one or more tasks by a remotely operated device of the remotely operated device system; detecting off-nominal events in the data with the one or more anomaly detection software modules and flagging each off-nominal event as an anomalous event data element; prioritizing the anomalous event data elements using an autonomous data triage module to obtain a ranked set of anomalous event data elements; and transmitting a subset of the ranked anomalous event data elements during a subsequent available communication window according to ranking to a remote location.

In an embodiment, the remotely operated device is an autonomous machine, and the one or more tasks are autonomous tasks.

In an embodiment, the prioritizing is performed using continuous prioritization by the autonomous data triage module.

In an embodiment, the prioritizing is performed in a continuous manner independent of a data transmission command from a source external to the autonomous data triage module.

In an embodiment, the continuous prioritization includes continuously updating the ranked set of anomalous event data elements to incorporate newly detected anomalous event data as the newly anomalous event data elements are detected.

In an embodiment, the continuous prioritization includes maintaining an active version of the ranked set of anomalous event data elements that is updated as new anomalous event data elements are detected.

In an embodiment, the prioritizing is performed using non-continuous prioritization by the autonomous data triage module.

In an embodiment, the prioritizing is performed only in response to a data transmission command from a source external to the autonomous data triage module.

In an embodiment, when the prioritizing is performed or controlled by the autonomous data triage module.

In an embodiment, when the prioritizing is performed or controlled by a source external to the autonomous data triage module.

In an embodiment, the autonomous data triage module prioritizes the anomalous event data elements using an expert system.

In an embodiment, the autonomous data triage module prioritizes the anomalous event data elements using logistic regression.

In an embodiment, the autonomous data triage module prioritizes the anomalous event data elements using a random forest technique.

In an embodiment, the autonomous data triage module prioritizes the anomalous event data elements using a machine learning algorithm.

In an embodiment, the machine learning algorithm is a feed forward neural network.

In an embodiment, the autonomous data triage module prioritizes the anomalous event data elements using any one or more of the following: an expert system; logistic regression, a random forest technique, and a machine learning algorithm.

In an embodiment, the one or more anomaly detection modules include an autonomous fault detection module for detecting faults during performance of the one or more tasks.

In an embodiment, the one or more anomaly detection modules include an autonomous health monitoring module for monitoring health of the remotely operated device and identifying off-nominal trends in the data.

In an embodiment, the one or more anomaly detection modules include any one or more of the following: an autonomous fault detection module for detecting faults during performance of the one or more autonomous tasks; and an autonomous health monitoring module for monitoring health of the remotely operated device and identifying off-nominal trends in the data.

In an embodiment, the size of the subset of the ranked anomalous event data elements is adjustable based on bandwidth constraints.

In an embodiment, the remotely operated device system is a space robotic system including a space segment and a ground segment, and wherein the bandwidth constraints are bandwidth constraints between the space segment and the ground segment.

In an embodiment, the off-nominal events predict faults in the operation of the remotely operated device system.

In an embodiment, the transmitted subset of the ranked anomalous event data elements is used to monitor health and performance of the remotely operated device system.

In an embodiment, the remotely operated device system is a space robotic system including a space segment and a ground segment, the autonomy processing device is in the space segment, and transmitting the subset of the ranked anomalous event data elements includes downlinking the subset of the ranked anomalous event data elements from the space segment to the ground segment.

In an embodiment, the method further includes performing the one or more tasks with the remotely operated device and collecting the data with one or more sensors during performance of the one or more tasks.

In an embodiment, the remotely operated device system is a space robotic system including a space segment and a ground segment, and the one or more sensors and the remotely operated device are in the space segment.

In an embodiment, the method is performed in space and the remote location is a ground station or ground terminal on Earth.

In an embodiment, the data comprises telemetry, sensor readings, still imaged, or video.

In an embodiment, the data includes any one or more of the following: telemetry, sensor readings, health and status data, operational data, images, video, error or fault report data, software bug data, algorithmic outputs, control commands, and diagnostic data

A system is also provided for implementing any one or more of the foregoing methods of performing data triage in a remotely operate device system. The system includes at least one computing device including a data storage device and one or more processors in communication with the data storage device.

A non-transitory computer-readable medium is also provided that stores processor-executable instructions that, when executed by one or more processors, cause the one or more processors to perform any one or more of the foregoing methods.

A system for performing data triage in a remotely operated device system is also provided. The system includes an autonomy processing device. The autonomy processing device includes: a communication interface for receiving data collected during performance of one or more tasks by remotely operated device; a memory for storing the data; and one or more processors in communication with the memory. The one or more processors are configured to execute one or more anomaly detection modules and an autonomous data triage module. The one or more anomaly detection modules are each configured to detect off-nominal events in the telemetry and flag each off-nominal event as an anomalous event data element. The autonomous data triage module is configured to prioritize the anomalous event data elements using a data triage algorithm to obtain a ranked set of anomalous event data elements; identify a subset of the ranked set of anomalous event data elements for transmission based on bandwidth constraints; generate a transmit data package including the subset of the ranked set of anomalous event data elements; and provide the transmit data package to a data transmission subsystem configured to transmit the transmit data package to a remote location.

In an embodiment, the remotely operated device is an autonomous machine, and the one or more tasks are autonomous tasks.

In an embodiment, the remotely operated device system is a space robotic system including a space segment and a ground segment, the autonomy processing device is in the space segment, and the data transmission subsystem is a downlink subsystem and the remote location is the ground segment.

In an embodiment, the system further comprises the remotely operated device and one or more sensors on or in an environment of the remotely operated device for collecting the data.

An autonomy processing device for triaging anomalous data in a remotely operated device system for transmission to a remote location is also provided. The autonomy processing device includes a data storage device and one or more processors in communication with the data storage device. The data storage device stores data collected during performance of one or more tasks by a remotely operated device of the remotely operated device system. The one or more processors execute one or more anomaly detection modules each configured to detect off-nominal events in the data and flag each off-nominal event as an anomalous event data element. The one or more processors also execute a data triage algorithm. The data triage algorithm is configured to: prioritize the anomalous event data elements for transmission to a remote location, the prioritized anomalous event data elements being a ranked set of anomalous event data elements; and identify a subset of the ranked set of anomalous event data elements to be transmitted to the remote location during a subsequent communication window between the robotic system and the remote location, wherein the subset is identified based on bandwidth constraints of the subsequent communication window.

In an embodiment, the remotely operated device is an autonomous machine, and the one or more tasks are autonomous tasks.

In an embodiment, the remotely operated device system is in space and the remote location is on Earth.

In an embodiment, the remotely operated device system is a space robotic system including a space segment and a ground segment, the autonomy processing device is in the space segment, and the remote location is in the ground segment.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a space robotics system including autonomous performance monitoring and data triage, according to an embodiment;
Figure 2 is a block diagram of the control device of Figure 1, according to an embodiment;
Figure 3 is a flow diagram of a method of autonomous data triage of the system of Figure 1, according to an embodiment;
Figure 4 is a flow diagram of a method of adjusting performance of the system of Figure 1 based on triaged downlinked data, according to an embodiment;
Figure 5 is a block diagram of a computer system for prioritizing and managing downlinking of data from a robotic system, such as the system of Figure 1, according to an embodiment;
Figure 6 is a flow diagram of a downlink priority hierarchy used by the data triage module of Figure 5, according to an embodiment;
Figure 7 is a block diagram of a data triage pipeline using machine learning, according to an embodiment;
Figure 8 is a block diagram of a data triage processing pipeline, according to an embodiment;
Figure 9 is a flow diagram of a method of continuous data triaging, according to an embodiment;
Figure 10 is a block diagram of a continuous data triaging method, according to an embodiment;
Figure 11 is a flow diagram of a method of non-continuous data triaging, according to an embodiment; and
Figure 12 is a block diagram of a non-continuous data triaging method, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to space-based robotics operations, and more particularly to systems and methods for detecting and managing anomalous event data in space-based robotics operations.

The present disclosure provides systems and methods for prioritizing and transmitting data outputs from a device or system, wherein the device or system is autonomous, semi-autonomous, or non-autonomous.

Those skilled in the art will appreciate that, although the embodiments described in the present disclosure are set forth in the context of robotic systems, the disclosed systems and methods for anomalous event detection and data triage are not so limited. The principles and techniques described herein may be implemented in connection with any remotely operated or controllable platform or device, including, without limitation, robotic systems, satellites, planetary rovers, unmanned aerial or marine vehicles, remote-operated industrial machinery, or other systems capable of receiving and executing remote instructions. Accordingly, the scope of the present disclosure should not be construed as being limited to robotic systems alone.

As used herein, the term "remotely operated device" or "remotely operated system" encompasses systems such as satellites, planetary rovers, unmanned aerial vehicles, robotic systems, industrial machinery, or other platforms that are capable of receiving and executing commands from a remote operator, whether or not the device or system further includes autonomous functionality. For example, while example embodiments of the present disclosure describe autonomous robots/machines performing autonomous operations, the data triage system may also be effectively utilized for triaging data in non-autonomous remotely operated devices as well.

Those skilled in the art will appreciate that references to "telemetry" within the present disclosure are provided by way of example and not limitation. The disclosed anomaly detection and data triage systems and methods may likewise operate on, process, or transmit other forms of data, including, without limitation, sensor data, operational data, control commands, diagnostic information, algorithmic outputs, error or fault reports, software bug data, or any other information capable of being generated by a device or software system and communicated to a local or remote operator, processor, or control system. This includes such data generated during operation of a remotely operated device, whether such device operates autonomously, semi-autonomously, or non-autonomously. Accordingly, the scope of the present disclosure should not be construed as being limited to telemetry data alone.

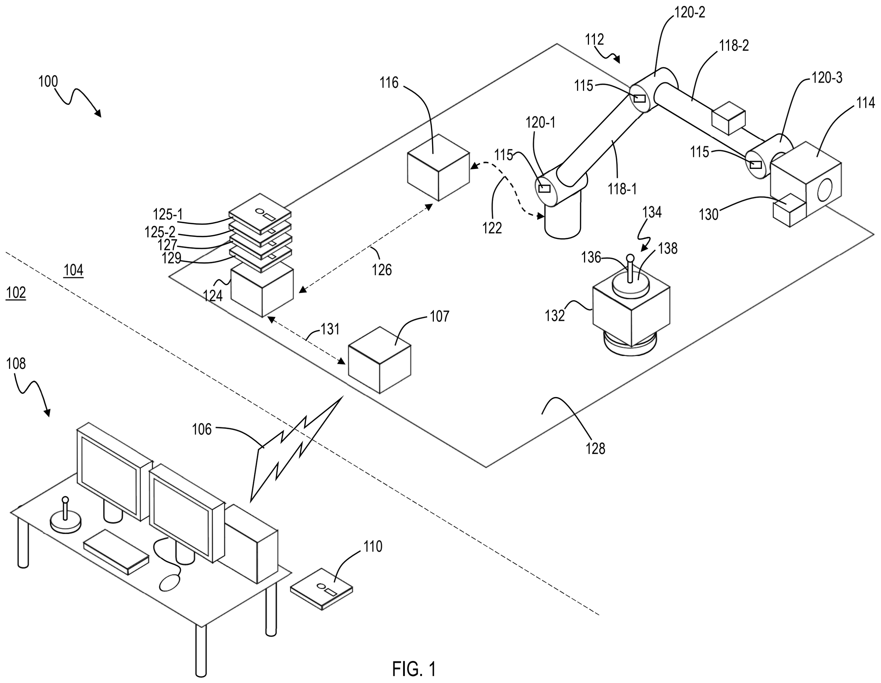

Referring now to Figure 1, shown therein is a robotic system 100, according to an embodiment. The robotic system 100 is a space-based robotic system. The robotic system 100 may be a robotic servicing system. The robotic servicing system may be configured to provide mechanical (e.g., payload manipulation, torquing) and electrical services (e.g., power transfer, data transfer) through one or more autonomous robots or autonomous machines to a payload (e.g., tool, system, machine, or object with which the autonomous machine interfaces). The robotic system 100 is configured to perform one or more types of autonomous operations.

The system 100 includes a ground segment 102 and a space segment 104. The ground segment 102 and space segment 104 are in communication with one another via communication link 106. The communication link 106 includes an uplink and downlink. The manner of uplink and downlink, including any necessary hardware, software, and infrastructure, may be any suitable manner of such communication known in the art. Ground segment 102 may be used to send commands or instructions to space segment 104 and to receive data from space segment 104. Space segment 104 includes communication subsystem 107 which includes any necessary hardware and software for sending or receiving data over communication link 106. This may include a downlink unit and an uplink unit (not shown).

The nature of communication link 106 between ground segment 102 and space segment 104 may cause periods during which communication of data along communication link 106 is possible (acquisition of signal, or AOS) and periods during which communication of data along communication link 106 is not possible (loss of signal, or LOS). Further, communication link 106 may experience further, transitional, conditions in which the bandwidth of a communications signal may be delayed (e.g., by distance or intermediary relay station hops) and/or attenuated (e.g., by partial obscuration at the signal wavelength or by antenna gain conditions). During these periods, data which may be otherwise sent to and monitored on ground 102 (i.e., during AOS) may accumulate, including data related to the performance of robotic operations by the system 100. This accumulated data may overwhelm bandwidth and storage capacities. Accordingly, the data triage techniques described in the present disclosure are of particular importance to manage downlinking of data accumulated during LOS and other reduced signal periods.

The ground segment 102 includes a robotic ground operator station 108 (or robotic workstation 108). The operator station 108 includes one or more computing systems including processors and memories storing processor executable instructions, as well as user interfaces and user input devices for the operator to interact with the computer system and control the space segment 102 components. The computer system of ground segment 102 executes ground segment software for performing the functions of the operator station 108. The ground segment software includes an on-orbit telemetry data assessment module 110. The on-orbit telemetry data assessment module 110 includes a user interface module for enabling an operator user to interact with the system 100 (e.g., through displaying data from the space segment 104 and receiving input on data to be sent to the space segment 104).

The space segment 102 includes an autonomous machine (or autonomous robot 112) for performing autonomous robotic functions and operations. The autonomous machine 112 in system 100 is a robotic manipulator (or robotic arm). The robotic manipulator is capable of performing tasks or operations in a fully autonomous manner (whether exclusively or non-exclusively). In other embodiments, the autonomous machine 112 may be any other type of machine, device, or system that is capable of performing fully autonomous operations (whether exclusively or non-exclusively) that may utilize or benefit from the autonomous methods and operations described herein. In another embodiment, the autonomous machine 112 may be a rover.

The space segment 104 includes a plurality of sensors 115 disposed on and in the environment of the robotic device 112 for acquiring telemetry data about the execution of robotic tasks by the robotic device 112, including fully autonomous robotic tasks. The sensors 115 may be of multiple sensor types. Example sensors include actuator control units, camera controllers, motor controllers, and arm controllers. Example sensor data that may be collected includes temperature, voltage, current, position, force, camera images or video, lidar data. In the case of a rover, sensors 115 may include current sensors for traction drive motors, encoders for the wheels, and an inertial measurement unit (IMU) mounted to the rover chassis for collecting current telemetry, odometric telemetry, and angular velocity and linear acceleration telemetry, respectively.

In Figure 1, sensors 115 are joint sensors for sensing operation of joints 120-1, 120-2, 120-3 (i.e., joint telemetry). It should be noted that sensors 115 are merely representative and are illustrated for simplicity. In application, other sensors (including other sensor types) are present in system 100 to collect sensor data regarding the operation of many system components during task performance. Camera system 130, described below, is also considered a sensor (and thus collects camera telemetry/images/video that may be analyzed and triaged by the system 100).

In an embodiment, the autonomous machine 112 is a robotic manipulator configured to have end effectors (e.g., end effector 114) on the base and tip of the robot 112. A base grapple fixture is a base interface that the autonomous machine 112 is connected to and is used to provide the autonomous machine 112 with power and data. While the tip end effector remains free to maneuver and manipulate objects. When performing a walk-off using the autonomous machine 112, the tip end of the manipulator 112 connects to another grapple fixture with the intent of the base end disconnecting and moving to a new position, thereby becoming the tip/free end of the manipulator 112. Changing the base grapple fixture includes turning off any data and power coming from the old base and turning on data and power on the new base end.

The robotic manipulator 112 includes an end effector 114 (or end of arm tool 114) coupled to a free end of the robotic manipulator 112. The robotic manipulator 112 manipulates, moves, and positions the end effector 114. The end effector 114 may be an end effector that can be picked up and removed by the robotic manipulator 112.

The robotic system 100 includes a control device 116 executing control software for controlling movement of the robotic manipulator 112. The control device 116 may implement a functional layer of the autonomous system including function level control software components. The robotic manipulator 112 includes booms (or links) 118-1, 118-2 and joints 120-1, 120-2, and 120-3 for articulating the manipulator 102. Control device 116 may be implemented at a single device or across a plurality of devices. For example, control device 116 may be implemented partially at a control device local to the autonomous machine 112 and partially at an executive control device configured to determine, plan, and schedule robotic operations.

Generally, the control device 116 controls movement (e.g., rotation) of the joints 120-1, 120-2, and 120-3, thereby enabling controlled movement of the robotic manipulator 102 and ultimately of the end effector 114. The manipulator 102 and control device 116 are communicatively connected and the connection is represented as a hashed line 122 between the manipulator 102 and control device 116. Control device 116 may include computing components (e.g., processors, data storage) and other control hardware.

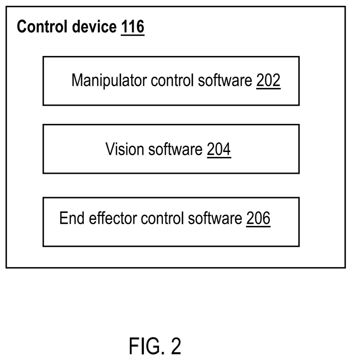

An example of the control device 116 is shown in Figure 2, according to an embodiment. The control device 116 includes manipulator control software 202, vision software 204, and end effector control software 206. The manipulator control software 202, when executed by a processor of the control device 116, controls articulation and movement of the manipulator 112, such as through controlling the articulation of joints 118. The manipulator control software 202 may receive sensor data from sensors in or on the manipulator 112 and other input data, process the input data, and generate control instructions based on the processing and send the control instructions to the manipulator 112 for execution. The vision software 204, when executed by a processor of the control device 116, processes image data acquired by vision components in the space segment 104, such as camera 130. Processing may include, for example, processing image data of a machine vision marker on payload 132 or determining a pose of the marker or payload 132 (e.g., via executing a pose estimation algorithm). The end effector control software 206, when executed, controls operation of the end effector 114. This may include operations such as grappling and provision of auxiliary services (e.g., torque transfer, power, data).

The robotic manipulator 112 and controller device 116 are coupled to platform 128. In a space-based application, the platform 128 may be a satellite or spacecraft bus, or vehicle platform (e.g., on a rover or the like). In some embodiments, robotic manipulator 112, controller device 116, and autonomy processing device 124 may be coupled to different platforms in the space segment 104.

The robotic system 100 further includes a camera vision system 130 for imaging an environment that the robotic manipulator 112 is in. The camera vision system 130 provides image data to the control device 116 and the autonomy processing device 124 (described further below) that allows the end effector 114 to be positioned in the environment. The camera vision system 130 also records video data during the performance of the robotic operation by the autonomous machine 112. While one camera vision system 130 is shown in Figure 1, it will be understood that multiple camera vision systems 130 may be present at different locations (on the autonomous machine 112 or independent therefrom) and record images or video of various aspects of the robotic operations.

In some embodiments, the camera vision system 130 may be configured to capture image data of a machine vision marker present on a payload (e.g., on payload 132). The machine vision marker may encode information about the marker or payload (e.g., identifying information, physical properties, etc.). The captured image data may then be processed by the control device 116 or autonomy processing device 124 to identify the machine vision marker and/or the payload. In some cases, the identity or other information obtained from processing the image data may be used by the system 100 to determine what operation the manipulator 112 or end effector 114 will perform or to confirm that the payload is the correct payload or payload type to receive the service of the end effector 114.

The end effector 114 is configured to perform one or more robotic functions. The robotic functions may be referred to as or enable the provision of services. For example, the end effector 114 may be configured to grapple and rigidize a payload (e.g., payload 132), transfer torque to a payload, transfer power to a payload, or transfer data to a payload. In some cases, the payload may be a tool, and the end effector 114 is configured to grapple and rigidize the tool and provide one or more services (e.g., mechanical, electrical) to enable operation of the tool and provision of the tool's service. In an example, the tool may be a refueling tool.

The space segment 104 includes a payload 132. The payload 132 is on platform 128. In other embodiments, the payload 132 may be on a different platform from the robotic manipulator 112.

The payload 132 may be any object that is to be interacted with by the robotic manipulator 112 and the end effector 114. For example, the payload 132 may be a payload that is to be moved by the robotic manipulator 112 or serviced by the end effector 114. In a particular example, the payload 132 may be a servicing tool that is configured to provide mechanical or electrical services to another payload.

In another example, the payload 132 may be a free flying object. The free flying object may be a spacecraft that is to be captured and docked to the platform 128.

In some embodiments, the end effector 114 may be a multi-purpose end effector configured to perform multiple robotic functions or interface with multiple different payload types.

The payload 132 has a grapple fixture 134 mounted thereto. The grapple fixture 134 may be a standardized grapple fixture interface. The end effector 114 is configured to grapple the grapple fixture 134 and rigidize the grapple fixture 134, thereby rigidizing the payload 132 to the robotic manipulator 112.

In the embodiment of Figure 1, the grapple fixture 134 includes a grapple probe 136 mounted to a base 138. The base 138 is mounted to the payload 132. The end effector 114 includes a probe guiding surface, a grapple mechanism, and a couple element. The robotic manipulator 112 moves the end effector towards the grapple fixture 134, causing the probe 136 to contact the probe guiding surface of the end effector 114, which guides the probe 136 into the grapple mechanism. The grapple mechanism grabs the probe 136 and retracts the probe 136 to a point at which the grapple fixture 134 is rigidized to the end effector 114. This includes bringing the base 138 into contact with the coupling element on the end effector 114, which may promote alignment of the grapple fixture 134. The profile of the coupling element and the base 138 are complementary. In some cases, the coupling element and the base 138 may be configured such that their mating restricts rotational movement of the grapple fixture 134 (and thus may rigidize in the roll direction).

In other embodiments, such a grapple fixture may not be present and the end effector 114 is configured to grapple the payload 132 without a designated grapple fixture.

In some cases, the payload 132 may include a prepared interface for enabling the end effector 114 to interface in multiple different ways with the payload 132. For example, the prepared interface may include two or more of a grapple fixture 134, a machine vision marker, and at least one auxiliary services module. Auxiliary services may include, for example, a torque receiver (e.g., torque bolt), a power receiving module (electrical connectors), or a data receiving module (data connectors). The auxiliary services module may implement a passthrough functionality which enables the end effector to deliver the auxiliary service to the payload through a standardized interface (the prepared interface).

The space segment 104 further includes an autonomy processing device 124. The autonomy processing device 124 is configured to execute encoded process-executable instructions for monitoring performance of autonomous operations by the autonomous machine 112. In an example, the monitored robotic operation is the grappling of payload 132 through grapple fixture 134 by end effector 114 and subsequent manipulation of the payload 132 by the autonomous machine 112. The autonomy processing device 124 may implement an executive layer of the autonomous system, including executive level control software components.

The autonomy processing device 124 is in communication with control device 116 via communication link 126. The autonomy processing device 124 may process data received from controller device 116. The autonomy processing device 124 is in communication with communication subsystem 107 via communication link 131. The autonomy processing device 124 may process data received from communication subsystem 107.

In particular, as described herein, the autonomy processing device 124 is configured to triage or prioritize anomalous event data from the performance or behaviour of the autonomous machine 112 and provided a set of prioritized anomalous event data elements to the communication subsystem 107 for downlink to ground 102 for review at operator station 108. The autonomy processing device 124 may also receive and process data received from operator station 108.

The autonomy processing 124 includes one or more processors for executing software components (or modules) and one or more data storage devices (e.g., memory) for storing data.

The autonomy processing device 124 includes autonomous performance monitoring software components 125-1 and 125-2 (generically and collectively referred to as software component(s) 125), data triage software component 127, and downlink manager software component 129.

The autonomous performance monitoring modules 125-1, 125-2 analyze telemetry data collected by the system 100 during autonomous machine 112 execution of an autonomous task (e.g., by sensors 115, camera 130) and detect and flag anomalous event data. Anomalous event data may correspond to different types of conditions, events, or behaviours that are or may be problematic to the current and future operation of the autonomous machine 112. The anomalous event data outputs of the autonomous performance monitoring modules 125-1, 125-2 are provided as input to the data triage module 127. The anomalous event data includes the relevant telemetry data associated with the detection and associated metadata, which may collectively be referred to as a "anomalous event data element".

In an embodiment, autonomous performance monitoring module 125-1 is configured to identify occurrences of off-nominal behaviour or certain trends corresponding to potential system or subsystem degradation (anomalous event data). The autonomous performance monitoring module 125-1 may then, depending on severity, inform other autonomy modules. The detected off nominal telemetry and video is flagged for priority downlink as anomalous event data.

In an embodiment, autonomous performance monitoring module 125-2 detects a fault condition (anomalous event data). When fault is detected, there are a series of mechanisms to isolate the fault, for example stopping the motion and tracing back to a safe way-point in space. Then, recovery procedures are executed as a corrective measure and put the system to a state that is able to proceed with the scheduled operation.

The data triage module 127 is configured to receive flagged anomalous event data elements from autonomous performance monitoring modules 125-1, 125-2 and prioritize which of the flagged anomalous event data elements to downlink during communication windows due to limited bandwidth and an abundance of data. The output of the data triage module 127 may be a ranking of priority anomalous event data elements for downlink. The output is provided to the downlink manager module 129.

The downlink manager module 129 is configured to generate a downlink data package based on the output from the data triage module 127. The downlink data package includes the prioritized anomalous event data elements set for downlink according to applicable communication window parameters (e.g., bandwidth, amount of data that can be downlinked). For example, the data triage module 127 may rank data elements in terms of downlink priority from 1-100. Based on downlink parameters/limitations, the top X (e.g., 20) data elements in the ranked list are flagged for downlink (this subset of the ranked data elements identified for downlink may be determined by the data triage module 127 or the data downlink manager module 129). The top X data elements are then assembled by the data downlink manager into a downlink data package.

The downlink data package of prioritized anomalous event data is sent from the autonomy processing device 124 to the communication subsystem 107, which downlinks the downlink data package. The downlink data package may include a set of anomalous event data elements or packets sorted or ranked according to priority for downlink.

The downlinked data package is received in the ground segment 102 and provided to operator station 108 where the priority data elements are displayed by on-orbit telemetry data assessment module 110. On-orbit telemetry data assessment module 110 enables the operator to review the priority anomalous event data elements and provide input data on subsequent action that is based on the downlinked data (e.g., adjusting prioritization of data elements, software updates, maintenance activities).

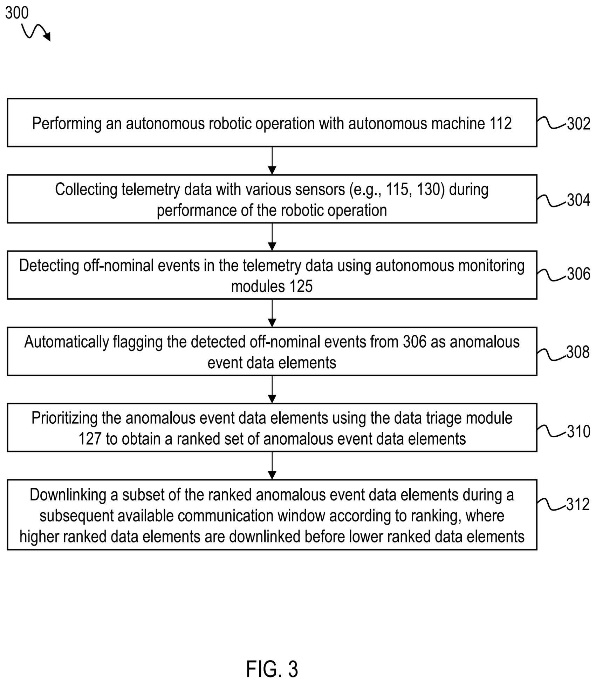

Referring now to Figure 3, shown therein is a method 300 of autonomous data triage of the system of Figure 1, according to an embodiment. One or more steps of method 300 may be encoded as computer-executable instructions which, when executed by one or more processors, cause the computer system to perform such steps.

At 302, the method 300 includes performing an autonomous robotic operation with autonomous machine 112. The autonomous robotic operation may be performed during an LOS period. Examples of robotic operations or tasks include moving the robot from point A to point B in space, grappling and manipulating a payload such as payload 132, free-floating satellite capture, and end-over-end walking.

At 304, the method 300 includes collecting telemetry data with various sensors (e.g., 130, 115) during performance of the robotic operation. An example may be continuously collecting motor current.

At 306, the method 300 includes detecting off-nominal events or states in the telemetry data collected at 302 using the autonomous monitoring modules 125 (anomalous event data). As an example, an algorithm may detect an off nominal trend in the data from t2 to t10.

At 308, the method 300 includes automatically flagging the detected off-nominal events from 306 as anomalous event data elements. As an example, this may include flagging or identifying the anomalous event for other algorithms and autonomy modules.

At 310, the method 300 includes prioritizing the anomalous event data elements from 308 using the data triage module 127 to obtain a set of ranked anomalous event data elements. The data triage module 127 may implement an algorithm that sorts or ranks the data for downlink. The sorting or ranking may depend on a priority matrix (e.g., system, type of fault) and other features identified for the application.

At 312, the method 300 includes downlinking only a subset of the ranked anomalous event data elements during a subsequent available communication window according to ranking, where higher ranked data elements are downlinked before lower ranked data elements. The size of the subset, including the overall data size and number of data elements, may be determined based on bandwidth limitations.

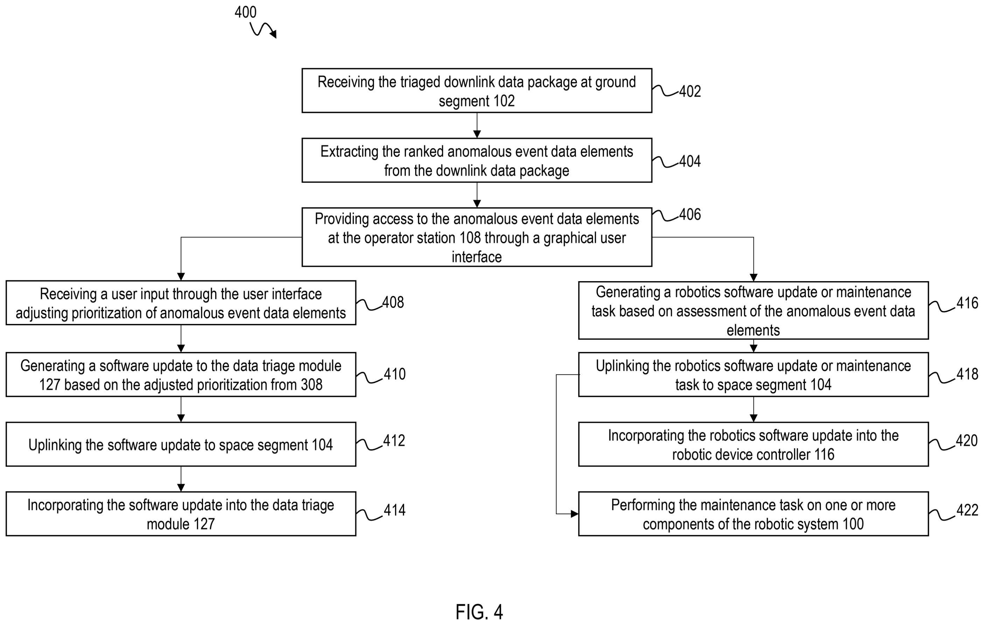

Referring now to Figure 4, shown therein is a method 400 of adjusting performance of autonomous tasks by the system of Figure 1 based on downlinked priority anomalous event data, according to an embodiment. One or more steps of method 400 may be encoded as computer-executable instructions which, when executed by one or more processors, cause the computer system to perform such steps.

At 402, the method 400 includes receiving, at ground segment 102, a triaged downlink data package downlinked (i.e., data downlinked at 314 of Figure 3). The downlinked data package includes a plurality of ranked anomalous event data elements each corresponding to a detected anomalous event.

At 404, the method 400 includes extracting the ranked anomalous event data elements from the downlink data package.

At 406, the method 400 includes providing access to the downlinked anomalous event data elements at the operator station 108 through a graphical user interface of review module 110. This may include displaying the anomalous event data elements in the graphical user interface. Anomalous event data elements may be displayed with certain metadata or descriptive data of the anomalous event (e.g., an event identifier or ID, a timestamp, a detecting sensor) which provides context for the associated off-nominal telemetry data. The operator may, through the graphical user interface, select and review various anomalous event data elements, including the telemetry data associated therewith.

Access to the priority data elements at operator station 108 may enable the operator to take subsequent action on the data. A first example of such action is described at 408-414.

At 408, the method 400 includes receiving a user input through the user interface adjusting prioritization of anomalous event data elements. In an embodiment, the user can change a priority matrix and re-run the data triage or manually sort/rank the data packets (anomalous event data elements). The operator may have the capability to prioritize a system over another or de-select a data set and replace it with another. The operator may be able to view data packets with time stamps and name of the system/subsystem the data is collected from (e.g., in a graphical user interface). Other information may be added to the log such as the operation being performed, or script being executed.

At 410, the method 400 includes generating a software update to the data triage module 127 based on the adjusted prioritization from 408. The software update when incorporated into data triage module 127, changes the manner in which anomalous event data elements are prioritized.

At 412, the method 400 includes uplinking the software update to space segment 104.

At 414, the method 400 includes incorporating the software update into the data triage module 127.

A second example of subsequent action taken on the data reviewed at 406 is described at 416-422.

At 416, the method 400 includes generating a robotics software update or maintenance task based on assessment of the priority data elements. This may be the case where, for example, one or more anomalous event data elements indicate off-nominal performance of a system or subsystem.

At 418, the method 400 includes uplinking the robotics software update or maintenance task to space segment 104.

At 420, the method 400 includes incorporating the robotics software update into the robotic device controller 116.

At 422, the method 400 includes performing the maintenance task on one or more components of the robotic system 100.

In some cases, remedial action performed based on review of priority downlinked data may include a command to adjust an operating parameter of one or more components of the autonomous machine 112, such as to slow degradation and prolong operating life. For example, in the case of autonomous machine 112 of Figure 1 with joints 120-1, 120-2, 120-3, downlinked priority off nominal or anomalous event data provided may indicate that one joint (e.g., 120-2) is showing an issue (e.g., operating at a torque level that is not ideal). Remedial action may include a reallocation of load to the other joints 120-1, 120-3 to prolong the life of the joint 120-2 or reduce chances of faster degradation. Accordingly, a response may include uplinking one or more commands to the space segment 104 to reallocate loads, to be executed by controller 116.

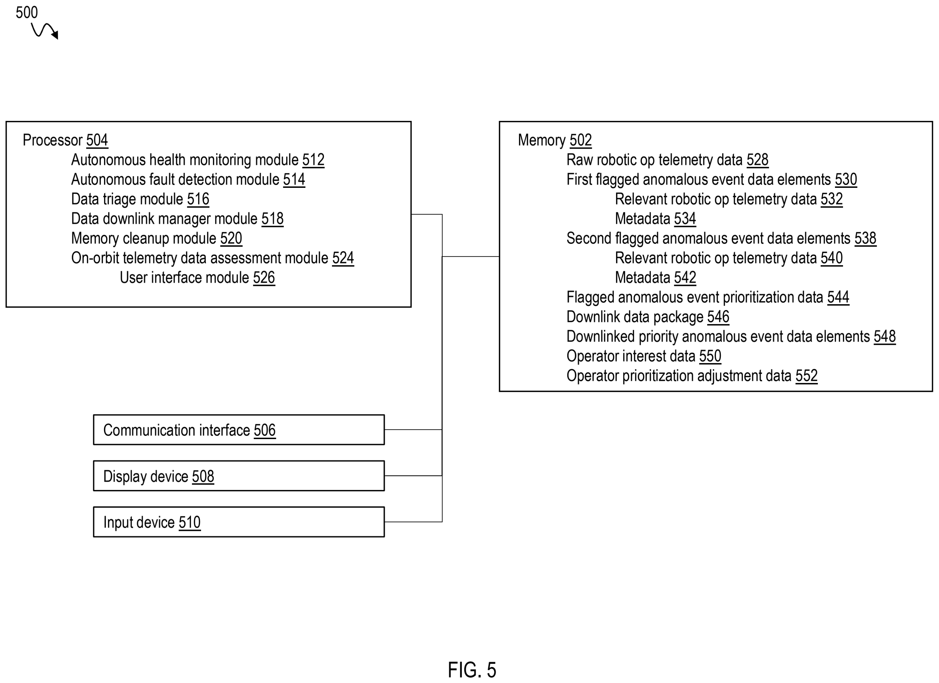

Referring now to Figure 5, shown therein is a computer system 500 for prioritizing and managing downlinking of anomalous event data from a robotic system, according to an embodiment.

The system 500 may be configured to implement any one or more of the methods described herein or portions thereof.

The system 500 may be implemented in the system 100 of Figure 1. For example, components of the computer system 500 may be implemented at one or more devices in space segment 104 (e.g., autonomous processing device 124) and at one or more devices in ground segment 102 (e.g., operator station 108).

The system 500 includes a memory 502 and a processor 504 in communication with the memory 502.

The processor 504 is configured to execute various software modules and components. In some embodiments, modules or components executed by the processor 504 may include server-side software components and client-side software components that communicate with each other in order to provide various features and functionalities of the system 500. In some cases, server-side components may be executed at a server computer and client-side components may be executed at a user device.

The system 500 includes a communication interface device 506 for transmitting and receiving data to and from other computing devices. The communication interface device 506 may include a network interface device for transmitting and receiving data via a network connection (e.g., local area network, wide area network). The network connection may be wired or wireless connection.

The system 500 includes a display device 508 for displaying data generated by the system 500. The display device 508 may be located at a user device, such as at operator station 108 of Figure 1.

The system 500 includes an input device 510 for receiving input data from a user interacting with the system 500. For example, a user may use input device 510 to interact with the system 500 through a graphical user interface generated by the processor 504 and displayed via the display device 508. The input device 510 may be located at the user device, such as at operator station 108 of Figure 1. A user may input data prioritization parameters that influence how data is triaged in the space segment 104 or commands or instructions for corrective action in response to triaged downlinked data through input device 610.

The processor 504 includes a health monitoring module 512, a fault detection module 514, a data triage module 516, a data downlink manager module 518, a memory cleanup module 520, and an on-orbit telemetry data assessment module 524 including a user interface module 526.

In an embodiment, modules 512, 514, 516, 518, and 524 correspond to modules 125-1, 125-2, 127, 129, and 110 of Figure 1, respectively.

The memory 502 stores raw robotic operations telemetry data 528. The raw telemetry data 528 is collected by a plurality of sensors and subsystems of the robotic system 100, such as sensors 115 and camera 130, during an operation performed by autonomous machine 112. The raw telemetry data 528 may be used to provide insight into how the robotic system 100 is performing.

Raw telemetry data 528 is provided as input to autonomous health monitoring module 512 and autonomous fault detection module 514. The types of telemetry data 528 provided to each of modules 512, 514 may overlap or differ.

The autonomous health monitoring module 512 is configured to analyze received telemetry data 528 and flag certain data elements (anomalous event data) 530 in the telemetry data 528 that are or may be of concern regarding the health of the autonomous machine 112. The first flagged anomalous event data elements 530 each include relevant telemetry data 532 and metadata 534. The metadata 534 may include data that is descriptive of the anomalous event. For example, the metadata 534 may include an event type indicating a type of fault, failure, or condition detected in the relevant telemetry data 532.

The autonomous health monitoring module 512 may be configured to detect and identify occurrences of off-nominal behaviour of the autonomous machine 112 as anomalous event data. The autonomous health monitoring module 512 may be configured to detect and identify certain trends corresponding to potential system or subsystem degradation. The autonomous health monitoring module 512 may be configured to flag the associated telemetry (i.e., telemetry data 532). This may include flagging for priority downlink (or for consideration by triage module 516). Detection of anomalous event data element 530 may result in flagging but continued execution (e.g., if fault not considered critical by control software), pausing the current autonomous task, aborting the current autonomous task, or aborting the current autonomous task and performing an alternate autonomous task. In an embodiment, the autonomous health monitoring module 512 executes a real-time algorithm that is configured to detect off-nominal situations, degradation, and certain faults that are not detected at the controller level.

In an embodiment, the health monitoring module 512 may be configured to identify and classify known off-nominal events from telemetry data and identify previously unseen off-nominal events. In an embodiment, this may be done using one or more machine learning models.

The autonomous health monitoring module 512 may be configured to detect faults. Detected fault types may include, for example:
***Abrupt and permanent faults:*** Changes in the state or parameters that occur much faster than the nominal process dynamics. Abrupt faults are difficult to predict but relatively easy to detect since the faults effects are larger than the modelling uncertainty.

***Transient faults:*** Fault appears for a finite number of cycles and then the state or parameter normalizes and may never show up again. For certain faults no evidence of fault is observable in the measurements - it is advantageous to track transient faults in order to understand system behavior and for trending purposes. The causes for transient faults may also become apparent at a later time when some other even occurs.

***Intermittent faults:*** Faults that occur at irregular intervals in a system that functions nominally at other times. Intermittent faults are difficult to troubleshoot since each individual factor does not create the fault alone, so the factors can be only identified when the fault is triggered and the system malfunctions.

***Incipient faults:*** Small and slowly developing faults that can be hidden in the uncertainty of the system model. Incipient faults may be difficult to detect since the fault effect can be hidden in the system uncertainty.

The autonomous health monitoring module 512 may be configured to detect flags or failures. Types of detected flags or failures may include, for example:

***Fatal failure:*** A condition that halts the operation due to faults in hardware where the system cannot recover. Failure manifests as "Transmit/Receive" errors since the unit shuts down.

***Critical failure:*** Failure prevents operations from continuing on the failed electronics string until certain commands are issued.

***Nuisance flag:*** Fault trigger that has no operational or health impact. Nuisance flags are almost always irrelevant BUT nuisance messages must still be checked to ensure that they were in fact a nuisance and not something else. Only once they are confirmed to be a nuisance can they be ignored.

The health monitoring module 512 may implement an anomaly detection algorithm. The anomaly detection algorithm may implement a rule-based technique, a model-based technique, a data-driven technique, or some combination thereof.

A rules-based technique (or qualitative method) uses a set of rules defined from relevant prior experience and engineering knowledge to determine whether the system performs as intended. The rules are defined to capture the nominal behaviour of the system and identify off-nominal features in the data. Examples include an expert system and limits/thresholds.

A model-based technique (or quantitative method) uses a system model that is built from fundamental concepts or assumptions and used to identify anomalies from nominal behaviour. Examples include parity equations, Kalman filters, particle filters, and Bayesian networks.

A data-driven technique uses a system model learnt from historical data to predict and validate a system's behaviour. Examples include statistical modelling (e.g., multivariate Gaussian, Parzen density estimation, mixture model approach, principal component analysis), machine learning (e.g., support vector machine, K nearest neighbour, K-mean, local outlier factor, regression, Gaussian process regression), and deep learning (recurrent neural network, autoencoder, long short-term memory).

Referring now to autonomous fault detection module 514, autonomous fault detection module 514 is configured to analyze received telemetry data 528 and flag certain anomalous event data elements (faults) 536 in the telemetry data 528 that represent a recognized fault type in performance of the autonomous machine 112. The second flagged anomalous event data elements 538 each include relevant telemetry data 540 and metadata 542. The metadata 542 may include data that is descriptive of the fault. For example, the metadata 542 may include a fault type or error code indicating a type of fault detected in the relevant telemetry data 532. Fault detection by autonomous fault detection module 514 may go beyond triage by performing an evaluation of cause.

In an embodiment, the fault detection module 514 incorporates logic to automatically identify and recover from known faults and off-nominal events. Fault detection may be implemented at different layers of abstraction. For example, the autonomous machine 112 may automatically attempt to recover from pre-defined faults based on the fault category and defined fault detection functions at the functional layer (e.g., controllers). This may include recovery to full operation or to a safe, survivable state which is a state where the robotic arm can withstand its environment, such as by maintaining its internal temperatures, and its mechanisms are in a safe configuration. Some recoveries would need context. For example, the type of recovery depends on the context, and what the robot was intended to do before it encountered the fault, which may be done at an executive layer (since it has the relevant contextual information).

In an embodiment, the autonomous fault detection module 514 includes logic built into scripts that is configured to automatically handle known fault types and off-nominal events during task performance (e.g., during capture). A script is a sequence of high-level autonomous commands with flow control logic that gets executed to perform an action. The action may be a nominal autonomous action or an action to recover from a failure.

The first and second flagged anomalous event data elements 530, 538 are provided to the data triage module 516 for prioritization for downlink.

The data triage module 516 analyzes first flagged anomalous event data elements 530 and second flagged anomalous event data elements 538 and outputs flagged anomalous event prioritization data 544. Flagged data element prioritization data 544 includes a ranking of the flagged anomalous event data elements, where a higher rank indicates a higher priority for downlink. Prioritization may be based on contextual information provided with the anomalous event data. In this sense, prioritization may vary with context (i.e., context-dependent prioritization). Having prioritization respond to contextual information prevents the use of a pre-planned triage approach. In one example, context information may be that a particular anomalous event was detected during performance of a contact operation (i.e., contact operation is the context here). The fact that a particular type of anomaly was detected during a contact operation may cause that anomaly to be prioritized over other types of detected anomalies (including over an anomaly of the same type that is detected in the context of a non-contact operation).

The data triage module 516 may prioritize flagged anomalous data elements according to a rule-based algorithm or technique, a context-based algorithm or technique, a machine learning-based algorithm or technique, or some combination thereof.

Example algorithms that may be used include an expert system, logistic regression, random forest, and feed forward neural network.

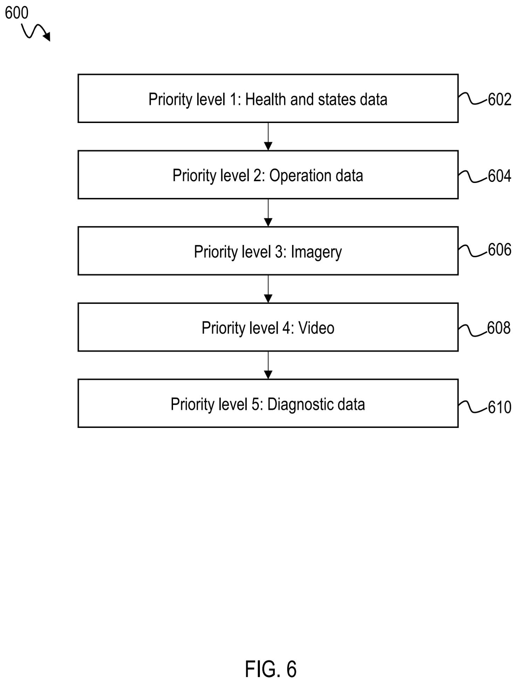

In an embodiment, the data triage module 516 implements an algorithm that prioritizes flagged anomalous event data elements according to a priority hierarchy. An example priority hierarchy is shown in Figure 6.

Priority hierarchy includes: Priority Level 1 (L1): health and status telemetry data 602 (e.g., loss of communication to other robotic elements, loss of power to robotic elements, mechanical failure, software fault, Schedule Overrun, Arm None specified, indicates if tip force is near or exceeds); Priority Level 2 (L2): operation data 604 (commanded joint angle (gamma) for joint x, measured joint rate (dot gamma) for joint x); Priority Level 3 (L3): imagery 606 (e.g., camera images); Priority Level 4 (L4): video 608 (e.g., camera video); and Priority Level 5 (L5): diagnostic data 610 (e.g., data collected (e.g., joint angle, velocity/rate, current, voltage) when system is in a diagnostic state).

It should be noted that the data triage module 516 can distinguish imagery and video (e.g., L3, L4 priority) from other telemetry (e.g., because imagery/video can be distinguished by their nature from other telemetry). The rest of the telemetry may contain field that are well identified (e.g., a command unique ID, or CUI). Each CUI can be categorized into what type of data it is reporting. Thus, the data triage module 516 may reference or determine a CUI within telemetry to determine which priority level the telemetry belongs to, and then use the determined priority level to prioritize the telemetry (or imagery, video). The data triage module 516 may have access to all telemetry and imagery items, system states, and the like, collected at each time step and may use logics to categorize.

The anomalous event prioritization 544 is provided to the data downlink manager module 518, which generates a downlink data package including a subset of the flagged anomalous event data elements 530, 538 that are ranked higher based on prioritization data 544.

The memory cleanup module 520 is configured to delete telemetry data 528 and flagged anomalous event data elements 530, 538 from memory 502 based on factors such as their initial prioritization by data triage module 516 (e.g., lower ranked items are discarded) and whether they have been confirmed received by an operator (e.g., through assessment module 524).

The downlink data package 546 is processed by on-orbit telemetry data assessment module 524 to extract downlinked priority data elements 548 (i.e., those flagged data elements that were downlinked).

The downlinked prioritized anomalous event data elements are displayed in the user interface module 526 for review.

The user interface module 526 may receive user input including operator interest data 550 and operator prioritization adjustment data 552. The operator interest data 550 may be used to set initial prioritization by the data triage module 516. The operator prioritization adjustment data 552 may be used to adjust the prioritization implemented by the data triage module 516 in ranking the anomalous event data elements.

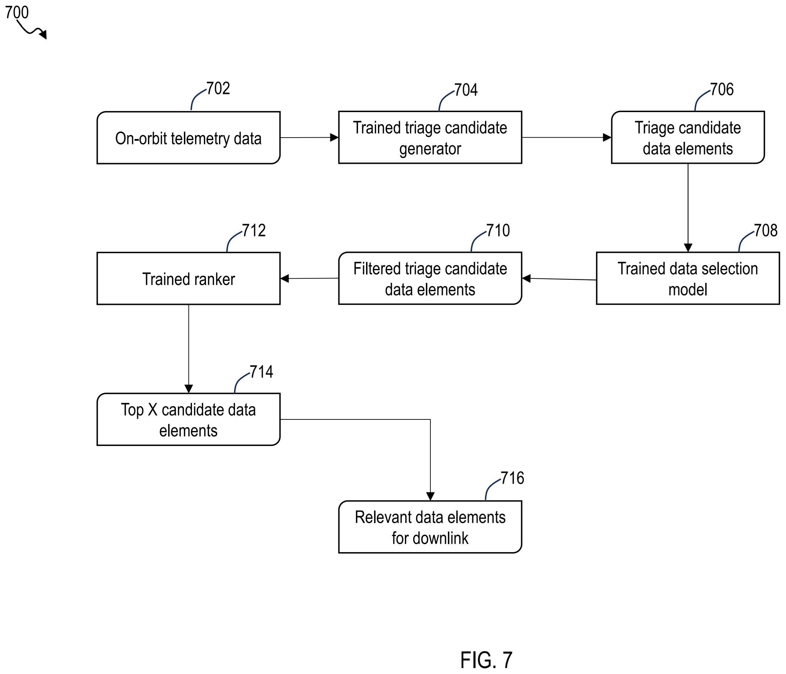

Referring now to Figure 7, shown therein is a data processing pipeline 700 for performing data triage using machine learning, according to an embodiment. The pipeline 700 may be implemented by the system 100 of Figure 1. The pipeline 700 may be implemented by the computer system 500 of Figure 5. The pipeline 700, or portions thereof, may be encoded as computer-executable instructions which, when executed by a computer system, cause the computer system to perform the pipeline 700. In particular, the pipeline 700 may be implemented by the data triage modules 127, 516 of Figures 1 and 5, respectively. The pipeline 700 may be used to prioritize flagged data elements 530, 538 for downlink.

Pipeline 700 starts with on-orbit telemetry data 702. The on-orbit telemetry data is collected during performance of a robotic operation by a robotic device by one or more sensors on the robotic device and in its environment.

The on-orbit telemetry data 702 is provided as input to a first machine learning model 704. The first machine learning model 704 is a trained triage candidate generator. The trained triage generator 704 determines from the on-orbit telemetry data 702 a set of triage candidate data elements 706.

The triage candidate data elements 706 are provided as input to a second machine learning model 708. The second machine learning model 708 is a trained data selection model. The trained data selection model 708 outputs filtered triage candidate data elements 710.

The filtered triage candidate data elements 710 are provided as input to a third machine learning model 712. The third machine learning model 712 is a trained ranker. The trained ranker 712 ranks the filtered triage candidate data elements 710 and outputs the top X candidate data elements 714, where X is a parameter of the model (this parameter may be configurable).

The top X candidate data elements 714 are then packaged as relevant data elements for downlink 716.

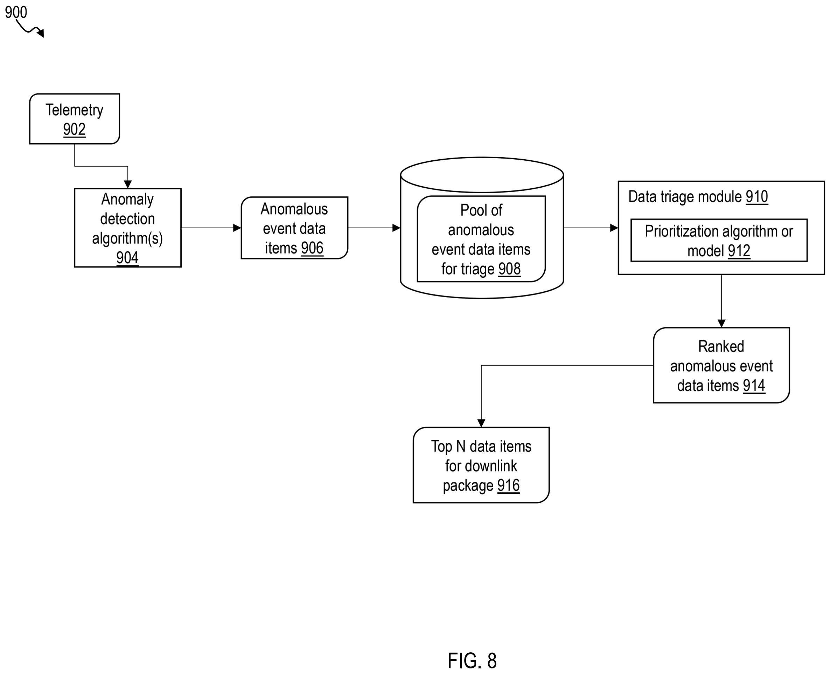

Referring now to Figure 8, shown therein is data triage processing pipeline 900, according to an embodiment.

The pipeline 900 starts with the collection of telemetry 902 during performance of a robotic operation or task.

The telemetry 902 is provided to one or more anomaly detection algorithms 904.

The anomaly detection algorithms 904 detect one or more types of anomalous events in the telemetry 902. The anomalies are output as flagged anomalous event data items 906. The anomalous event data items 906 may include, for example, an anomaly type identifier and telemetry 902 associated with the detected anomaly. A anomalous event data item 906 may also be referred to as an anomaly data packet.

The anomalous event data items 906 are provided to a pool of anomalous event data items for triage 908. The pool of anomalous event data items for triage 908 includes all anomalous event data items 906 that have not yet been downlinked. The pool of anomalous event data items for triage 908 may grow over time as new data items are flagged by the anomaly detection algorithms 904 and added to the pool 908 and shrink over time as anomalous event data items 906 are downlinked (and subsequently removed from the pool 908).

Anomalous event data items in the pool of anomalous event data items for triage 908 are prioritized by data triage module 910 (e.g., data triage module 516 of Figure 5) using a prioritization algorithm or model 912.

The prioritization algorithm or model 912 outputs a ranking of the pool of anomalous event data items 914. The ranking indicates a prioritization of the flagged data items for downlink (i.e., which to prioritize over others).

From the ranked anomalous event data items 914, the top N anomalous event data items 916 are determined based on downlink parameters (e.g., bandwidth, size) and sent for downlink as a downlink package. The determination is made automatically by the data triage module 910 (or other software component). The downlink parameters may vary based on downlink opportunity. It should be noted that N may vary depending on downlink parameters (i.e., where flagged data items are smaller, N may be greater, and where flagged data items are larger, N may be smaller).

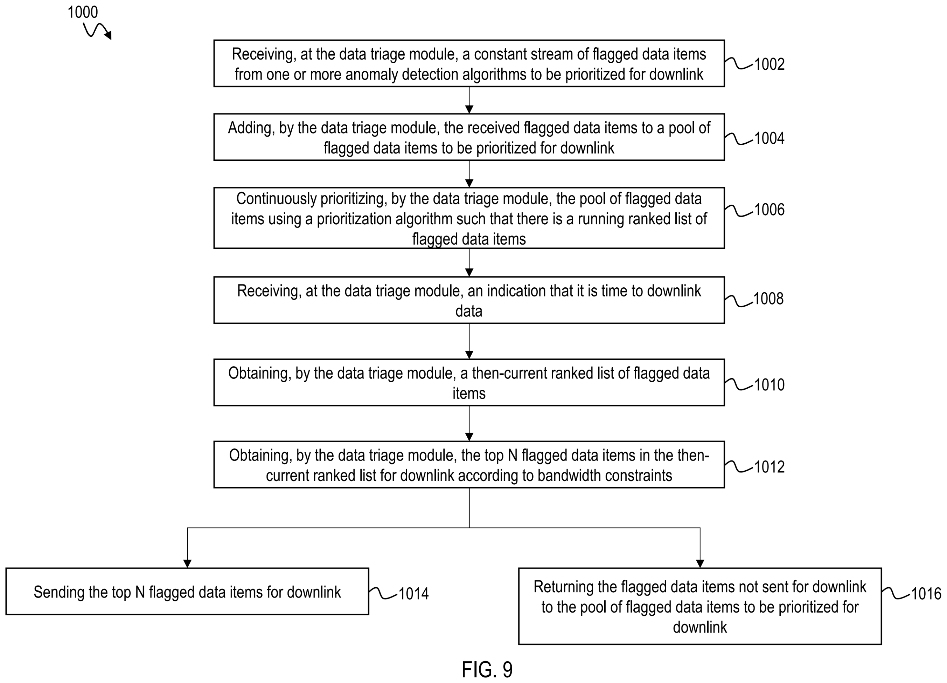

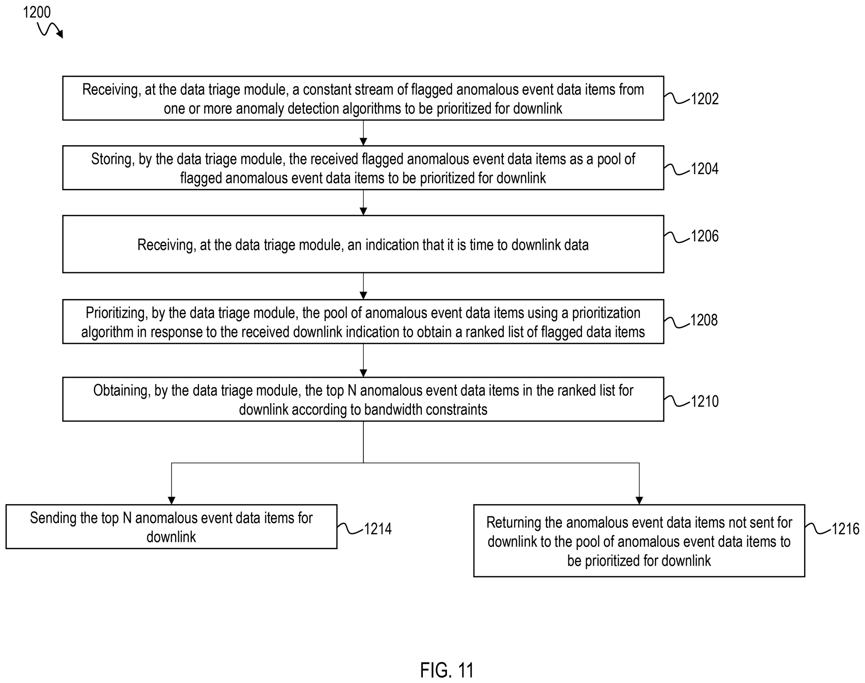

Reference will now be made to Figures 9-12, which illustrate embodiments of the present disclosure implementing continuous prioritization (Figures 9-10) and non-continuous prioritization (Figures 11-12) for data triage. The primary difference between these approaches is that in a continuous prioritization implementation, the data triage module maintains a prioritized ranking of anomalous event data elements available for downlink at all times. How often that prioritized ranking is updated may vary and what causes the updating may vary. Continuous prioritization is not dependent upon a downlink opportunity being present. Continuous prioritization may integrate newly received anomalous event data elements into an existing ranking of anomalous event data elements. In a non-continuous prioritization approach, the data triage module does not maintain a prioritized ranking of anomalous event data elements. Rather, the data triage module generates a prioritized ranking of anomalous event data elements only when a command from an external source (e.g., from another software component acting autonomously, from a user through a user input) is received. For example, in a continuous prioritization, upon receiving a downlink command from an external source, the then-current or most recent prioritized ranking of anomalous event data elements is accessed and output by the data triage module; in a non-continuous prioritization, upon receiving a downlink command from an external source, a new prioritization operation is initiated, and a new prioritized ranking of anomalous event data elements is generated by the data triage module.

Referring now to Figure 9, shown therein is a method 1000 of continuous data triage, according to an embodiment. The method 1000 may be encoded as computer-executable instructions which, when executed by one or more processors, cause the one or more processors to perform the method 1000.

In an embodiment, the method 1000 may be implemented by the data triage module 516 of Figure 5.

The method 1000 may be considered "continuous" data triaging in the sense that the prioritization or triaging of data is happening continuously in the background until there is an opportunity to downlink and a then-current prioritization is used to obtain the flagged anomalous event data items to downlink.

At 1002, the method 1000 includes receiving, at a data triage module (e.g., data triage module 516), a constant stream of flagged data items over time from one or more anomaly detection algorithms to be prioritized for downlink.

At 1004, the method 1000 includes adding, by the data triage module, the received flagged data items to a pool of flagged data items to be prioritized for downlink. Without downlinking any data items from the pool, the pool will grow over time as new flagged data items are added.

At 1006, the method 1000 includes continuously prioritizing, by the data triage module, the pool of flagged data items using a prioritization algorithm such that there is a running ranked list of flagged data items. In other words, the data triage module regularly prioritizes the pool of data in order to determine a ranking for downlink. In some cases, the prioritization is performed at regular intervals. In some cases, the prioritization is performed when new flagged data items are received (e.g., reaching a threshold of new flagged data items added to the pool). In this way, the prioritization accounts for newly received flagged data items with existing data items in the pool that have not yet been downlinked.

At 1008, the method 1000 includes receiving, at the data triage module, an indication that it is time to downlink data. This may be in response to a user input (e.g., a downlink instruction) or without user input (e.g., detection of an AOS period).

At 1010, the method 1000 includes obtaining a then-current ranked list of flagged data items. As the data triage module is continuously prioritizing the pool of flagged data items, the downlink indication serves as the instruction to use a then-current ranking to determine which items to downlink. This may be likened to "freezing" the continuously prioritized list at this moment.

At 1012, the method 1000 includes obtaining, by the data triage module, the top N flagged data items in the then-current ranked list for downlink according to bandwidth constraints. The top N flagged data items may be as many of the top ranked data items as will fit within the bandwidth constraints.

At 1014, the method 1000 includes sending, by the data triage module, the obtained N flagged data items for downlink.

At 1016, the method 1000 includes returning the flagged data items not sent for downlink to the pool of flagged data items to be prioritized for downlink.

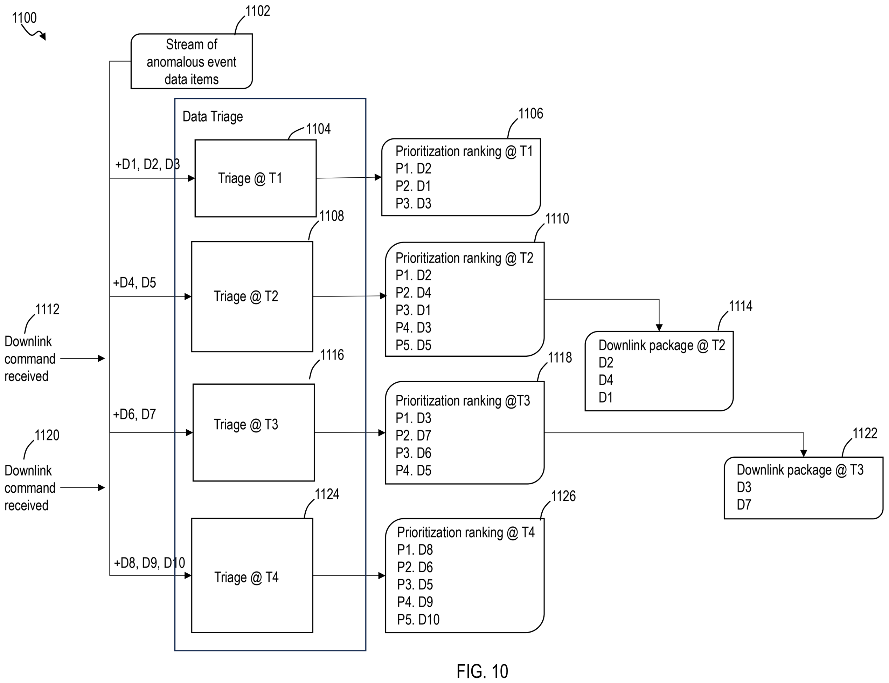

Referring now to Figure 10, shown therein is an example continuous prioritization method 1100 implemented by a data triage module, according to an embodiment. The method 1100 is an example of the method 1000 of Figure 9. It should be understood that method 1100 is simplified for illustrative purposes and that in application the numbers of data items being prioritized may be much greater.

The method 1100 implements data triaging at regular intervals. The intervals are represented as T1, T2, T3, and T4.

The method 1100 includes a stream of flagged data items 1102 identified by one or more anomaly detection algorithms being provided to and stored in a triage pool (e.g., pool 908 of Figure 9). The triage pool is a collection or set of flagged data items that are to be prioritized for downlink. The composition of the triage pool changes over time as new flagged data items are received and certain flagged data items are downlinked.

The triage pool at T1 1104 includes flagged data items D1, D2, and D3, which were received from the stream of flagged data items 1102 during a first time period.

At T1, a data triage operation is executed by the data triage module to prioritize data items D1-D3 to obtain a prioritization ranking at T1 1106. The prioritization ranking at T1 1106 is (from highest to lowest): D2, D1, D3.

After T1, the stream of flagged data items 1102 provides new flagged data items D4 and D5, which are added to the triage pool.

The triage pool at T2 1108 includes flagged data items D1-D3 and D4-D5.

At T2, a second data triage operation is executed by the data triage module to prioritize new data items D4, D5 into the existing prioritization ranking 1106. This obtains a new prioritization ranking at T2 1110. The prioritization ranking at T2 1110 is: D2, D4, D1, D3, D5. As can be seen, certain newer data items have been prioritized over older data items by the prioritization algorithm.

A downlink command 1112 is received at T2 (or after T2 but before reprioritization at T3). Downlink commands may be initiated by a human operator or by another software component in communication with the data triage module configured to identify downlink opportunities.

In response to the downlink command 1112, the data triage module generates a downlink package at T2 1114 based on bandwidth constraints of the downlink opportunity. In this case, the top three items D2, D4, D1 fit within the bandwidth constraints and are selected for downlink. The downlink package 1114 is output for downlink. After the data items D2, D4, D1 are downlinked (or confirmation is received from ground, such as by a human operator), those data items are removed from the triage pool.

After T2, the stream of flagged data items 1102 provides new flagged data items D6 and D7 to the triage pool.

The triage pool at T3 1116 includes flagged data items D3, D5, D6, D7.

At T3, a third data triage operation is executed by the data triage module to prioritize new data items D6, D7 into the existing prioritization ranking 1110. This obtains a new prioritization ranking at T3 1118. The prioritization ranking at T3 1118 is: D3, D7, D6, D5.

A downlink command 1120 is received at T3 (or after T3 but before reprioritization at T4).

In response to the downlink command 1120, the data triage module generates a downlink package at T3 1122 based on bandwidth constraints of the downlink opportunity. In this case, the top two items D3, D7 fit within the bandwidth constraints and are selected for downlink. The downlink package 1122 is output for downlink. After the data items D3, D7 are downlinked (or confirmation is received from ground, such as by a human operator), those data items are removed from the triage pool.

After T3, the stream of flagged data items 1102 provides new flagged data items D8-D10 to the triage pool.

The triage pool at T4 includes D5, D6, D8, D9, D10. At T4, a fourth data triage operation is executed by the data triage module to prioritize new data items (8-D10 into the existing prioritization ranking 1118. The triage pool at T4 1124 is prioritized by the data triage module at T4 to This obtains a new prioritization ranking at T4 1126. The prioritization ranking at T4 1126 is: D8, D6, D5, D9, D10. As can be seen, certain newer data items have been prioritized over data items that remained in the triage pool after the last downlink.

As can be seen by the example in Figure 10, the data triage module is continuously reprioritizing a pool of flagged data elements over time and as new flagged data items are added to the pool. When a downlink opportunity is presented, the then-current prioritization ranking is used to identify the anomalous event data items for downlink (that meet bandwidth constraints). Anomalous event data items not downlinked remain in the triage pool for continuous prioritization with new flagged data items as they are received.

Referring now to Figure 11, shown therein is a method 1200 of non-continuous data triage, according to an embodiment. The method 1000 may be encoded as computer-executable instructions which, when executed by one or more processors, cause the one or more processors to perform the method 1200.

In an embodiment, the method 1200 may be implemented by the data triage module 516 of Figure 5.

The method 1200 may be considered "non-continuous" data triaging in the sense that the prioritization or triaging of data only occurs at the time of a downlink opportunity. As such, the triage pool is ranked only once at the time of downlink, rather than continuously regardless of whether there is a downlink opportunity. In this sense, non-continuous data triaging may be considered dependent on a downlink opportunity while continuous data triaging is independent of a downlink opportunity (i.e., it is reprioritizing constantly in the background).

At 1202, the method 1200 includes receiving, at a data triage module, a constant stream of flagged anomalous event data items over time from one or more anomaly detection algorithms to be prioritized for downlink.

At 1204, the method 1200 includes storing, by the data triage module, the received flagged data items as a pool of anomalous event data items to be prioritized for downlink.

At 1206, the method 1200 includes receiving, at the data triage module, an indication that it is time to downlink data.

At 1208, the method 1200 includes prioritizing, by the data triage module, the pool of flagged anomalous event data items using a prioritization algorithm in response to the received downlink indication to obtain a ranked list of anomalous event data items.

At 1210, the method 1200 includes obtaining, by the data triage module, the top N anomalous event data items in the ranked list for downlink according to bandwidth constraints.

At 1212, the method 1200 includes sending the top N anomalous event data items for downlink.

At 1214, the method 1200 includes returning the anomalous event data items not sent for downlink to the pool of anomalous event data items to be prioritized for downlink.

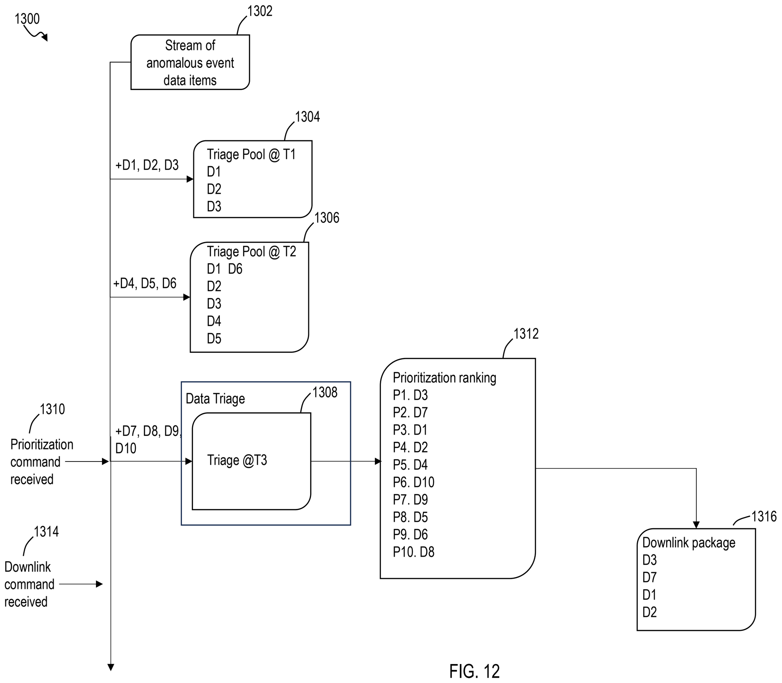

Referring now to Figure 12, shown therein is an example non-continuous prioritization method 1300 implemented by a data triage module, according to an embodiment. The method 1300 is an example of the method 1200 of Figure 11. It should be understood that method 1300 is simplified for illustrative purposes and that in application the numbers of data items being prioritized may be much greater.

The method 1300 implements data triaging only at times of downlinking. For example, the opportunity to downlink data may prompt the prioritization of flagged data items by the data triage module (which would otherwise not be performing such prioritization).

Three time intervals are represented in example method 1300: T1, T2, T3.

The method 1300 includes a stream of anomalous event data items 1302 identified by one or more anomaly detection algorithms being provided to and stored in a triage pool (e.g., pool 908 of Figure 9). The triage pool is a collection or set of flagged anomalous event data items that are to be prioritized for downlink. The composition of the triage pool changes over time as new anomalous event data items are received and certain anomalous event data items are downlinked.

The triage pool at T1 1304 includes anomalous event data items D1, D2, and D3, which were received from the stream of anomalous event data items 1102 during a first time period.

The triage pool at T2 1306 includes flagged anomalous event data items D1-D6. Data items D4, D5, and D6 were flagged and received from 1302 between T1 and T2.

The triage pool at T3 includes flagged anomalous event data items D1-D10. Data items D7-D10 were flagged and received from 1302 between T2 and T3.

A prioritization command 1310 is received at T3 (or after T3 but before additional data items are added to the triage pool. The prioritization command may be user-initiated (e.g., by a human operator through a GUI) or machine-initiated (e.g., by another software component). At 1308, in response to the prioritization command, a data triage operation is executed by the data triage module to prioritize the data items D1-D10 to obtain a prioritized ranking 1312.

A downlink command 1314 is received. In response to the downlink command 1314, the triage pool at T4 1310 is prioritized by the data triage module to obtain a prioritization ranking 1314. The prioritization ranking 1312 is: D3, D7, D1, D2, D4, D10, D9, D5, D6, D8.

The data triage module generates a downlink package 1316 based on bandwidth constraints of the downlink opportunity. In this case, the top four items D3, D7, D1, D2 fit within the bandwidth constraints and are selected for downlink. The downlink package 1316 is output for downlink. After the data items D3, D7, D1, D2 are downlinked (or confirmation is received from ground, such as by a human operator), those data items are removed from the triage pool. As such, after downlink, the triage pool would include D4, D5, D6, D8, D9, D10.

While the above description provides examples of one or more apparatus, methods, or systems, it will be appreciated that other apparatus, methods, or systems may be within the scope of the claims as interpreted by one of skill in the art.

## Claims

1. A method of performing data triage in a remotely operated device system, the method comprising:
providing data to an autonomy processing device configured to execute one or more anomaly detection software components, the data collected during performance of one or more tasks by a remotely operated device;
detecting off-nominal events in the data with the one or more anomaly detection software modules and flagging each off-nominal event as an anomalous event data element;
prioritizing the anomalous event data elements using an autonomous data triage module to obtain a ranked set of anomalous event data elements; and
transmitting a subset of the ranked anomalous event data elements during a subsequent available communication window according to ranking to a remote location.

2. The method of claim 1, wherein the prioritizing is performed using continuous prioritization by the autonomous data triage module.

3. The method of claim 2, wherein the continuous prioritization includes continuously updating the ranked set of anomalous event data elements to incorporate newly detected anomalous event data as the newly anomalous event data elements are detected.

4. The method of claim 2, wherein the continuous prioritization includes maintaining an active version of the ranked set of anomalous event data elements that is updated as new anomalous event data elements are detected.

5. The method of claim 1, wherein the autonomous data triage module prioritizes the anomalous event data elements using any one or more of the following: an expert system; logistic regression, a random forest technique, and a machine learning algorithm.

6. The method of claim 1, wherein the one or more anomaly detection modules include any one or more of the following: an autonomous fault detection module for detecting faults during performance of the one or more tasks; and an autonomous health monitoring module for monitoring health of the remotely operated device and identifying off-nominal trends in the data.

7. The method of claim 1, wherein the size of the subset of the ranked anomalous event data elements is adjustable based on bandwidth constraints.

8. The method of claim 7, wherein the remotely operated device system is a space robotic system including a space segment and a ground segment, and wherein the bandwidth constraints are bandwidth constraints between the space segment and the ground segment.

9. The method of claim 1, wherein the remotely operated device system is a space robotic system including a space segment and a ground segment, wherein the autonomy processing device is in the space segment, and wherein transmitting the subset of the ranked anomalous event data elements comprises downlinking the subset of the ranked anomalous event data elements from the space segment to the ground segment.

10. The method of claim 1, wherein the remotely operated device is an autonomous machine, and the one or more tasks are autonomous tasks.

11. The method of claim 1, wherein the data includes any one or more of the following: telemetry, sensor readings, health and status data, operational data, images, video, error or fault report data, software bug data, algorithmic outputs, control commands, and diagnostic data.

12. The method of claim 1, wherein the method is performed in space, and the remote location is a ground station or ground terminal on Earth.

13. The method of claim 1, wherein the remotely operated device is a robot, a satellite, a planetary rover, or remote industrial machinery.

14. A system for implementing any one of the methods of claims 1-14, the system comprising at least one computing device including a data storage device and one or more processors in communication with the data storage device.

15. A non-transitory computer-readable medium storing processor-executable instructions that, when executed by one or more processors, cause the one or more processors to perform any one of the methods of claims 1-14.
